# EUROPEAN PATENT SPECIFICATION

(11) **EP 2 803 520 B1**
(45) Date of publication and mention of the grant of the patent: **20.01.2016**
(21) Application number: 14162229.0
(22) Date of filing: 28.03.2014
(51) Int. Cl.: B60K 26/02

(54) **Accelerator pedal, particularly for a motor-vehicle**
Gaspedal, insbesondere für ein Motorfahrzeug
Pédale d'accélérateur, en particulier pour un véhicule automobile

(30) Priority: 13.05.2013 IT TO20130380
(43) Date of publication of application: 19.11.2014
(73) Proprietor: Bitron S.p.A., 10122 Torino (TO) (IT)
(72) Inventor: Cavallo, Emanuele, 17100 Savona (IT)
(74) Representative: Quinterno, Giuseppe

(56) References cited:
- WO-A1-2004/108465
- DE-A1- 4 300 096
- DE-A1-102009 032 664
- JP-A- 2002 283 872

## Description

The present invention relates in general to an accelerator pedal, particularly for motor-vehicles.

More specifically, the present invention concerns an accelerator pedal of the type comprising
a support housing in which there is mounted a control lever rotatable about a first axis, from a first position to a second position, against the action of resilient opposition means arranged between said lever and a reaction arm of a structure connected to the housing in a substantially pivotable manner about a second axis which is essentially parallel to said first axis;
said structure having also a friction arm adapted to apply a friction force against said lever, the arrangement being such that said friction force is variable depending on the variation in the angular position of the lever.

An accelerator pedal of this type is described in the German patent application DE 10 2009 032 664 A1. In this accelerator pedal according to the prior art, the control lever is supported rotationally between a wall of the housing and one end, shaped in the manner of a ball portion guide, of a rocker arm pivotably mounted in the support housing. An opposition spring is arranged between the other end of said rocker arm and the control lever. The arrangement is such that the control lever is supported rotationally in the housing about a movable axis. In such an accelerator pedal according to the prior art, if the aforementioned first end of the rocker arm should break and become detached from the rest of the rocker arm, the possibility of operating the accelerator pedal could be hindered. Moreover, the opposition spring would cause mutual splaying of the control lever and remaining portion of said rocker arm and therefore, even if it were possible to operate the accelerator pedal, the reaction to the pedal, provided by said opposition spring, would be affected.

The object of the present invention is to provide an accelerator pedal of the type specified above, with improved workability if parts thereof fails.

This object together with other objects is achieved according to the invention by an accelerator pedal of the type initially defined, characterized in that the control lever is supported rotationally in the housing about a fixed axis, in a stationary seat defined in said housing, so that the control lever is able to rotate about said first axis also in the absence of said pivotable structure or its friction arm.

In one embodiment the aforementioned structure in an intermediate portion thereof is constrained to the housing by means of at least of connecting member which is integral with or fixed to the housing and able to undergo resilient torsion about said second axis, so as to allow pivoting of said structure relative to the housing.

Owing to these characteristics, should the aforementioned second portion, or friction arm, of said structure break, the control lever would still be able to be safely operated about its axis of rotation. Moreover, the reaction to the pedal provided by the opposition means would also remain unaffected. In such a situation, therefore, only the friction reaction induced by the aforementioned second portion, or friction arm, of the pivotable structure would be absent.

In the aforementioned embodiment the aforementioned structure is conveniently constrained to the support housing by means of a pair of connecting members which are integral with or fixed to the housing and substantially aligned with each other along the aforementioned second axis.

This or these connecting member(s) may conveniently have an essentially cross-shaped cross-section.

In a currently preferred embodiment the support housing comprises an upper shell and a lower support member which are coupled and fixed together and cooperate so as to define jointly the stationary support seat for rotation of the control lever.

Further characteristic features and advantages of the invention will become clear from the following detailed description provided purely by way of a non-limiting example, with reference to the accompanying drawings in which:
Figure 1 is a perspective view of an accelerator pedal according to the present invention;
Figure 2 is an exploded perspective view of the pedal shown in Figure 1;
Figure 3 is another exploded perspective view of the pedal shown in Figure 1;
Figure 4 is a partial cross-sectional view along the line IV-IV of Figure 1;
Figure 5 is a perspective view, from above, of a lower support member included in the pedal according to the preceding figures; and
Figure 6 is a cross-sectional view along the line VI-VI of Figure 1.

In the drawings 1 denotes overall an accelerator pedal according to the present invention.

The accelerator pedal 1 comprises a support housing, denoted overall by 2. In the embodiment shown by way of example the support housing 2 comprises an upper shell 3 and a lower support member 4 which are coupled and fixed together.

The accelerator pedal 1 comprises a control lever 5 rotatably mounted in the housing 2.

The control lever 5 at one end has an integrally formed part 5a, in the form of a curved plate, intended during use to be pressed by the user's foot.

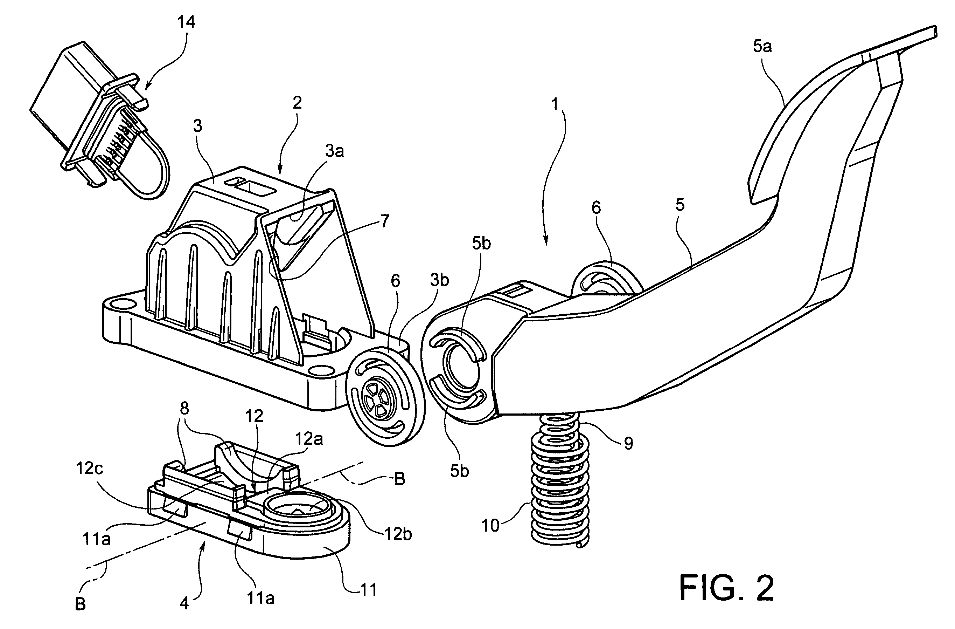

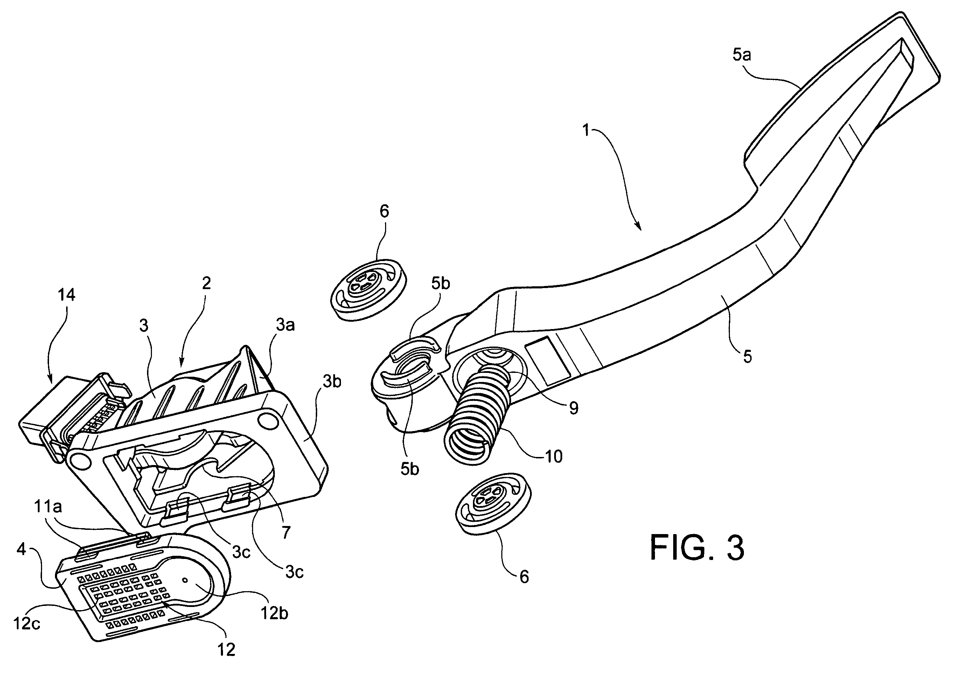

As can be seen more clearly in Figures 2 and 3, at the opposite end the control lever 5 has, on each side, a pair of curved parts 5b which project transversely outwards and on which corresponding rotational support pieces 6 are mounted.

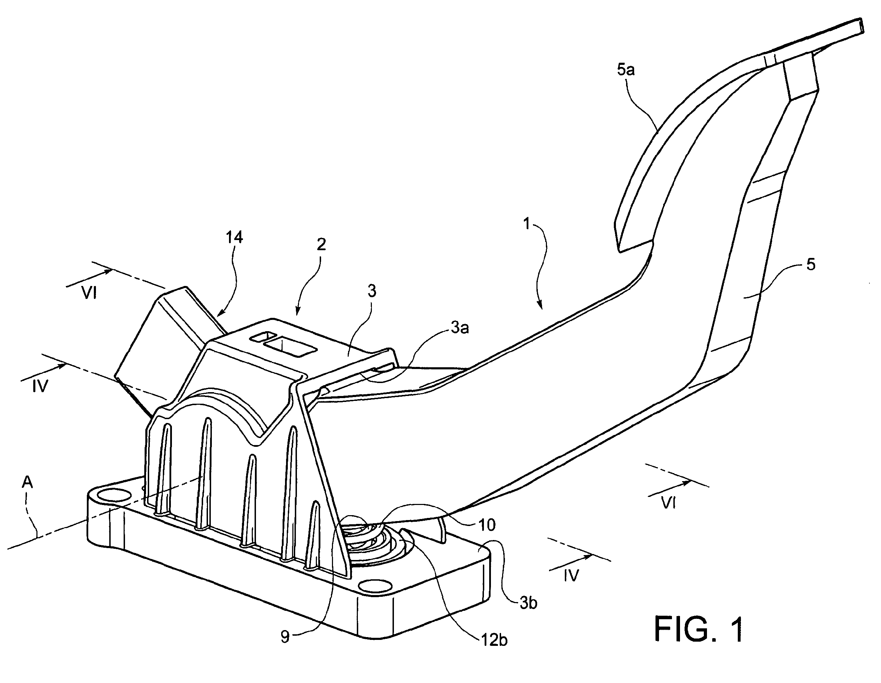

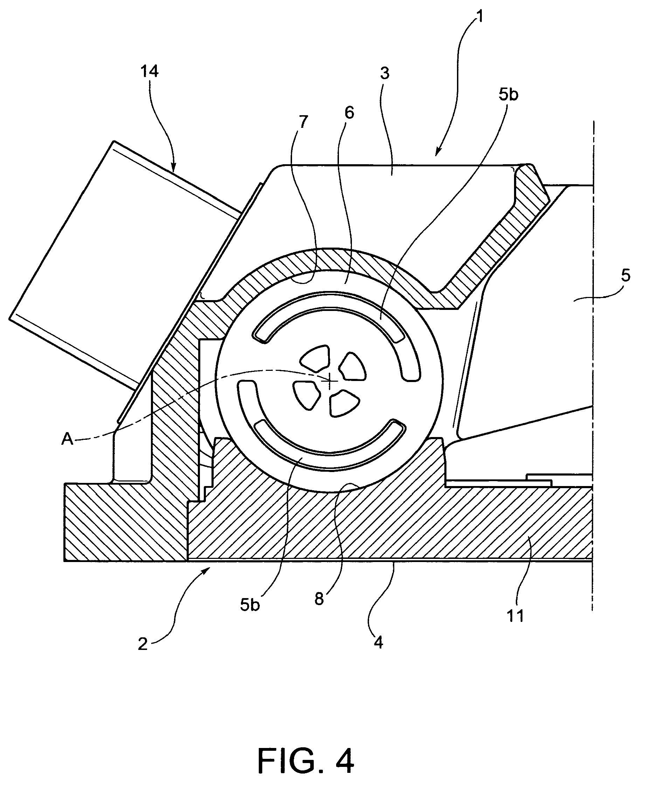

The control lever 5 is supported rotationally in the support housing 2, about a fixed axis, indicated by A in Figures 1 and 4. This lever 5 is in particular mounted rotatably in a pair of stationary seats defined in the housing 2, partly in the shell 3 and partly in the lower support member 4.

With reference to Figures 2 and 3, two inwardly curved seats indicated by 7 are provided inside the shell 3 on two facing side walls thereof. Correspondingly, further inwardly curved seats 8 are formed in the lower support member 4 (see also Figure 4).

The arrangement is such that the rotational support pieces 6 associated with the control lever 5 are housed and rotatable inside corresponding pairs of seats 7 and 8 of the housing 2, as can be seen when viewing in particular Figure 4.

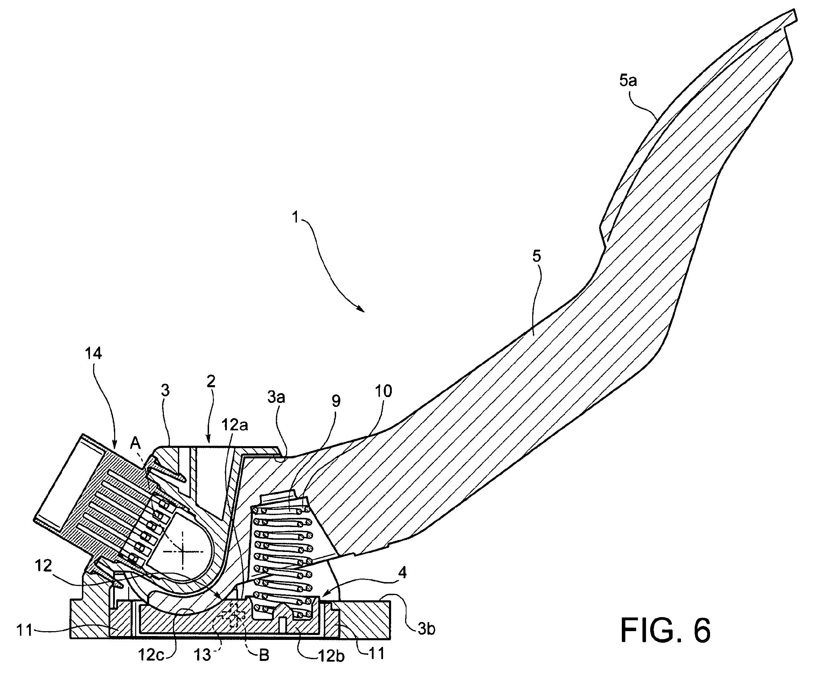

In Figures 2, 3 and 6, the reference numbers 9 and 10 denote two interpenetrating and substantially coaxial helical springs arranged between the control lever 5 and the lower support member 4. These springs acts on the lever 5, tending to cause a rotation thereof about the axis A in an anti-clockwise direction when viewing for example Figure 6.

Said springs tend in particular to keep the control lever 5 in the rest position shown in Figures 1 and 6, where this lever bears against a contact wall 3a of the upper shell 3. From this position, the control lever 5 may be rotated into a working position against the action of the springs 9 and 10, if necessary as far as a "kick down" position where this lever 5 comes to a stop against a bottom flange 3b of the shell 3.

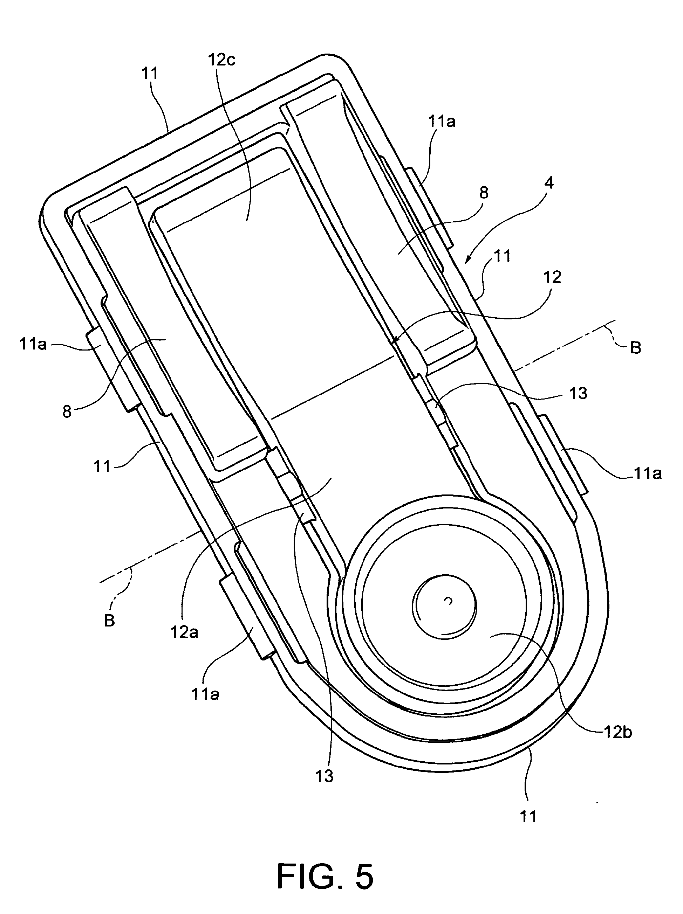

As can be seen more clearly in Figure 5, the lower support member 4 comprises essentially a surround or frame 11 with two main sides which are essentially parallel to each and in which the seats 8 for the rotational support pieces 6 of the control lever 5 are formed at the top.

In the embodiment shown the frame 11 has a plurality of projecting parts 11a which can be snap-engaged inside corresponding retaining recesses 3c provided in the shell 3 in the region of the flange 3b.

A structure 12 substantially pivotable about an axis B, which is operationally parallel to the axis A of rotation of the control lever 5, is defined in the lower support member 4, inside the frame 11.

The structure 12 extends generally inside in a spaced relationship with respect to the frame 11. It comprises an intermediate portion 12a which is constrained to the frame 11 by means of at least one connecting member, and preferably two connecting members 13, which are integral with and therefore fixed to said portion and to the frame 11.

In the embodiment shown by way of example the connecting members 13 have an essentially cross-shaped cross-section, as can be seen more clearly by viewing Figure 6 where these parts are shown in broken lines. These connecting members are aligned with each other along the axis B-B.

With reference in particular to Figure 5, the structure 12 has a first portion 12b, or reaction arm, against which the opposite ends of the springs 9 and 10 react. On the opposite side of the axis 12, the structure 12 has a second portion 12c, or friction arm, cooperating operationally with the control lever 5.

With reference to Figures 5 and 6, the friction arm 12c of the structure 12 has a convex curved profile substantially matching the middle profile of the end of the control lever 5 extending inside the housing 2.

The overall arrangement is such that operation of the control lever 5 by a user causes, by means of the springs 9 and 10, biasing of the reaction arm 12b of the structure 12, which flexes downwards substantially about the axis B. At the same time, the friction arm 12c of this structure is biased upwards so as to engage with the corresponding matching profile of the control lever 5.

The arrangement is conveniently such that the connecting members 13 thus undergo resilient torsion about the axis B, allowing the structure 12 as a whole to perform a kind of pivoting movement relative to the frame 11 and the housing 2 as a whole.

The user therefore senses a reaction against the pedal, due partly to the resilient reaction of the opposition springs 9 and 10 and partly to the frictional force applied by the friction arm 12c to this lever.

Conveniently, the shell 3 and the lower support member 4 may be made of a moulded plastic material.

Should, during operation, the friction arm 12c break, the friction applied to the corresponding profile of the control lever 5 would be reduced, but the resilient reaction provided by the opposition springs 9 and 10 upon lowering of this lever would remain absolutely unaffected. Therefore, in such a malfunction condition, the pedal would still be able to rotate about the axis A, against the reaction provided by the opposition springs 9 and 10 and any friction still provided by the remaining part of the friction arm 12c. Thus the workability of the accelerator pedal according to the prior art described above is improved.

The accelerator pedal 1 furthermore comprises a transducer device, denoted overall by 14, which is fixed to the support housing 2 and comprises sensor means of the type known per se, able to provide electric signals indicating the angular position assumed by the control lever 5. These signals may be conveyed to an electronic control unit of the motor-vehicle for managing acceleration of the engine speed, depending on the degree of operation of the control lever 5.

Obviously, without altering the principle of the invention, the embodiments and the constructional details may be greatly varied with respect to that described and illustrated purely by way of a non-limiting example, without thereby departing from the scope of the invention as defined in the accompanying claims.

Thus, for example, the structure 12 may be formed as a part separate and different from the support housing 2 and be hinged with the latter rotatably about the aforementioned second axis B using means known per se, such as pins and the like.

## Claims

1. Accelerator pedal (1), particularly for a motor-vehicle, comprising
a support housing (2; 3, 4) in which there is mounted a control lever (5) rotatable about a first axis (A), from a first position to a second position, against the action of resilient opposition means (9, 10) arranged between said lever (5) and a reaction arm (12b) of a structure (12) connected to the housing (2; 3, 4) in a substantially pivotable manner about a second axis (B) which is essentially parallel to said first axis (A);
said structure (12) having also a friction arm (12c) adapted to apply a friction force against said lever (5), the arrangement being such that said friction force is variable depending on the variation in the angular position of the lever (5);
the accelerator pedal (1) being **characterized in that**
the control lever (5) is supported rotationally in the housing (2; 3, 4) about a first fixed axis (A), in a stationary seat (7, 8) defined in said housing (2; 3, 4), so that the control lever (5) is able to rotate about said first axis (A) also in the absence of said structure (12) or its friction arm (12c).

2. Accelerator pedal (1) according to Claim 1, wherein said structure (12) in an intermediate portion (12a) thereof between said arms (12b, 12c) is constrained to the housing (2; 3, 4) by means of at least one connecting member (13) which is integral with or fixed to the housing (2; 3, 4) and able to undergo resilient torsion about said second axis (B) so as to allow a pivoting of said structure (12) relative to the housing (2; 3, 4).

3. Accelerator pedal according to Claim 2, wherein the aforementioned structure (12) is constrained to the housing (2; 3, 4) by means of a pair of connecting members (13) integral with or fixed to the housing (2; 3, 4) and substantially aligned with each other along said second axis (B).

4. Accelerator pedal according to Claim 2 or Claim 3, wherein said at least one connecting member (13) has an essentially cross-shaped cross-section.

5. Accelerator pedal according to Claim 1, wherein said structure (12) has an intermediate portion (12a) between its said arms (12b, 12c) which is hinged with the support housing (2; 3, 4) rotatably about said second axis (B).

6. Accelerator pedal according to any one of the preceding claims, wherein the support housing (2) comprises an upper shell (3) and a lower support member (4) which are coupled and fixed together and cooperate so as to define jointly the stationary support seat for rotation of said control lever (5).

7. Accelerator pedal according to Claim 6 and one of Claims 1 to 4, wherein said pivotable structure (12) is formed integrally with the lower support member (4).

8. Accelerator pedal according to Claim 7, wherein at least said lower support member (4) is made of a moulded plastic material.

## Patentansprüche

1. Gaspedal (1), insbesondere für ein Motorfahrzeug, das umfasst:
ein Trägergehäuse (2; 3, 4), in dem ein Steuerhebel (5) um eine erste Achse (A) von einer ersten Position zu einer zweiten Position gegen die Wirkung von elastischen Widerstandsmitteln (9, 10) drehbar montiert ist, welche zwischen dem Hebel (5) und einem Gegenwirkungsarm (12b) einer Struktur (12) angeordnet sind, die mit dem Gehäuse (2; 3, 4) in einer im Wesentlichen schwenkbaren Weise um eine zweite Achse (B) verbunden ist, die im Wesentlichen parallel zu der ersten Achse (A) ist,
wobei die Struktur (12) auch einen Reibungsarm (12c) hat, der geeignet ist, eine Reibungskraft gegen den Hebel (5) anzuwenden, wobei die Anordnung derart ist, dass die Reibungskraft abhängig von der Änderung in der Winkelposition des Hebels (5) veränderlich ist;
wobei das Gaspedal (1) **dadurch gekennzeichnet ist, dass**
der Steuerhebel (5) um eine erste feste Achse (A) drehbar in dem Gehäuse (2; 3, 4) in einem ortsfesten Auflager (7, 8) gehalten wird, das in dem Gehäuse (2; 3, 4) definiert ist, so dass der Steuerhebel (5) fähig ist, sich auch bei Nichtvorhandensein der Struktur (12) oder ihres Reibungsarms (12c) um die erste Achse (A) zu drehen.

2. Gaspedal (1) nach Anspruch 1, wobei die Struktur (12) in einer ihrer Zwischenpositionen (12a) zwischen den Armen (12b, 12c) mit Hilfe wenigstens eines Verbindungselements (13) auf das Gehäuse (2; 3, 4) beschränkt wird, welches integral mit dem Gehäuse (2; 3, 4) oder daran fixiert ist und fähig ist, eine elastische Torsion um die zweite Achse (B) durchzumachen, um das Schwenken der Struktur (12) relativ zu dem Gehäuse (2; 3, 4) zu erlauben.

3. Gaspedal nach Anspruch 2, wobei die vorstehend erwähnte Struktur (12) mit Hilfe eines Paars von Verbindungelementen (13) auf das Gehäuse (2; 3, 4) beschränkt wird, welche integral mit dem Gehäuse (2; 3, 4) oder daran fixiert sind und im Wesentlichen entlang der zweiten Achse (B) miteinander ausgerichtet sind.

4. Gaspedal nach Anspruch 2 oder Anspruch 3, wobei das wenigstens eine Verbindungselement (13) einen im Wesentlichen kreuzförmigen Querschnitt hat.

5. Gaspedal nach Anspruch 1, wobei die Struktur (12) einen Zwischenabschnitt (12a) zwischen ihren Armen (12b, 12c) hat, die drehbar um die zweite Achse (B) an dem Trägergehäuse (2; 3, 4) eingehängt ist.

6. Gaspedal nach einem der vorangehenden Ansprüche, wobei das Trägergehäuse (2) eine obere Schale (3) und ein unteres Trägerelement (4) umfasst, die miteinander gekoppelt und aneinander fixiert sind und zusammenwirken, um gemeinsam das ortsfeste Trägerauflager für die Drehung des Steuerhebels (5) zu definieren.

7. Gaspedal nach Anspruch 6 und einem der Ansprüche 1 bis 4, wobei die schwenkbare Struktur (12) integral mit dem unteren Trägerelement (4) ausgebildet ist.

8. Gaspedal nach Anspruch 7, wobei wenigstens das untere Trägerelement (4) aus einem Kunststoffformmaterial hergestellt ist.

## Revendications

1. Pédale d'accélérateur (1), particulièrement pour un véhicule à moteur, comprenant un logement de support (2 ; 3, 4) dans lequel est monté un levier de commande (5) rotatif autour d'un premier axe (A), d'une première position à une seconde position, contre l'action de moyens d'opposition résilients (9, 10) agencés entre ledit levier (5) et un bras de réaction (12b) d'une structure (12) raccordée au logement (2 ; 3, 4) de manière sensiblement pivotante autour d'un second axe (B) qui est essentiellement parallèle audit premier axe (A) ; ladite structure (12) comportant également un bras de frottement (12c) adapté pour appliquer une force de frottement contre ledit levier (5), l'agencement étant tel que ladite force de frottement est variable en fonction de la variation de la position angulaire du levier (5) ;
la pédale d'accélérateur (1) étant **caractérisée en ce que** le levier de commande (5) est supporté de façon rotative dans le logement (2 ; 3, 4) autour d'un premier axe fixe (A), dans un siège stationnaire (7, 8) défini dans ledit logement (2 ; 3, 4), pour que le levier de commande (5) soit capable de tourner autour dudit premier axe (A) également en l'absence de ladite structure (12) ou de son bras de frottement (12c).

2. Pédale d'accélérateur (1) selon la revendication 1, dans laquelle ladite structure (12) dans une partie intermédiaire (12a) de celle-ci entre lesdits bras (12b, 12c) est assujettie au logement (2 ; 3, 4) au moyen d'au moins un membre de raccordement (13) qui fait partie intégrante du logement (2 ; 3, 4), ou est fixé à celui-ci, et capable de subir une torsion résiliente autour dudit second axe (B) afin de permettre un pivotement de ladite structure (12) par rapport au logement (2 ; 3, 4).

3. Pédale d'accélérateur selon la revendication 2, dans laquelle la structure susmentionnée (12) est assujettie au logement (2 ; 3, 4) au moyen d'une paire de membres de raccordement (13) faisant partie intégrante du logement (2 ; 3, 4), ou étant fixés à celui-ci, et sensiblement alignés l'un avec l'autre le long dudit second axe (B).

4. Pédale d'accélérateur selon la revendication 2 ou la revendication 3, dans laquelle ledit au moins un membre de raccordement (13) comporte une section transversale essentiellement en forme de croix.

5. Pédale d'accélérateur selon la revendication 1, dans laquelle ladite structure (12) comporte une partie intermédiaire (12a) entre ses dits bras (12b, 12c) qui est articulée avec le logement de support (2 ; 3, 4) de façon rotative autour dudit second axe (B).

6. Pédale d'accélérateur selon l'une quelconque des revendications précédentes, dans laquelle le logement de support (2) comprend une coque supérieure (3) et un membre de support inférieur (4) qui sont accouplés et fixés ensemble et coopèrent afin de définir conjointement le siège de support stationnaire pour la rotation dudit levier de commande (5).

7. Pédale d'accélérateur selon la revendication 6 et l'une des revendications 1 à 4, dans laquelle ladite structure pivotante (12) est formée d'un seul tenant avec le membre de support inférieur (4).

8. Pédale d'accélérateur selon la revendication 7, dans laquelle au moins ledit membre de support inférieur (4) est fait d'une matière plastique moulée.
